# EUROPÄISCHE PATENTSCHRIFT

(11) **EP 2 914 844 B1**
(45) Veröffentlichungstag und Bekanntmachung des Hinweises auf die Patenterteilung: **25.03.2020**
(21) Anmeldenummer: 13799197.2
(22) Anmeldetag: 31.10.2013
(51) Int. Cl.: F03D 80/80, F03D 7/02

(54) **VERFAHREN ZUM BETREIBEN EINER WINDENERGIEANLAGE, WINDENERGIEANLAGE UND STEUERUNGSEINRICHTUNG FÜR EINE WINDENERGIEANLAGE**
METHOD FOR OPERATING A WIND POWER PLANT, WIND POWER PLANT AND CONTROL DEVICE FOR A WIND POWER PLANT
PROCÉDÉ POUR FAIRE FONCTIONNER UNE ÉOLIENNE, ÉOLIENNE ET DISPOSITIF DE COMMANDE POUR UNE ÉOLIENNE

(30) Priorität: 31.10.2012 DE 102012110466
(43) Veröffentlichungstag der Anmeldung: 09.09.2015
(73) Patentinhaber: 2-B Energy Holding B.V., 7556 PE Hengelo (NL)
(72) Erfinder: JAKOBSSON, Mikael, A-1230 Wien (AT); PEELS, Herbert, NL-7631 HS Ootmarsum (NL)
(74) Vertreter: Träger, Denis
(86) Internationale Anmeldenummer: PCT/EP2013/003279
(87) Internationale Veröffentlichungsnummer: WO 2014/067661

(56) Entgegenhaltungen:
- EP-A1- 0 110 807
- EP-A1- 2 154 363
- EP-A2- 0 995 904
- EP-A2- 2 159 415
- WO-A1-02/064973
- WO-A1-2005/090781
- DE-A1- 19 645 581
- DE-U1- 29 715 248

## Beschreibung

Die Erfindung betrifft ein Verfahren zum Betreiben einer Windenergieanlage gemäß dem Oberbegriff des Anspruchs 1. Des Weiteren betrifft die Erfindung eine Windenergieanlage gemäß dem Oberbegriff des Anspruchs 9. Schließlich betrifft die Erfindung eine Steuerungseinrichtung für eine Windenergieanlage gemäß dem Oberbegriff des Anspruchs 12.

Moderne Windenergieanlagen zeichnen sich durch große Leistungen und damit einhergehend entsprechende Baugrößen auf. In den letzten Jahren ist die Größe der Anlagen von einigen Metern Rotordurchmesser und einigen zehn bis hundert Kilowatt Ausgangsleistung auf inzwischen weit über hundert Meter Rotordurchmesser und Leistungen von mehreren Megawatt je Anlage gewachsen. Darüber hinaus werden Windenergieanlagen heute nicht nur an Land (onshore), sondern in zunehmenden Maße auch auf hoher See (offshore) aufgestellt. Neben der technischen Entwicklung im Bereich der Getriebe- und Generatortechnik wird versucht, insbesondere Schwierigkeiten der Materialbelastung und optimalen Steuerung von Windenergieanlagen zu lösen. Die hier gegenständlichen Windenergieanlagen weisen einen an einer drehbar gelagerten Gondel gelagerten Rotor mit wenigstens einem, vorzugweise zwei oder vier Rotorblättern, auf.

Bei den aktuellen großen Rotordurchmessern sind signifikant unterschiedliche Windgeschwindigkeiten und teilweise Windrichtungen nicht nur für verschiedene Blätter eines Rotors zu beobachten, sondern auch bereits bei einem einzigen Blatt. Diese Unterschiede in der Belastung treten sowohl instantan als auch mehr oder weniger periodisch im Verlauf der Rotorumdrehung auf. Neben unterschiedlichen Windgeschwindigkeiten und Windrichtungen sind außerdem Luftwirbel, Abschattungen und lokalstarke Blattbelastungen mit entsprechenden Wiegekräften zu beobachten. Viele dieser Schwierigkeiten werden bereits durch sogenannte Lee-Läufer minimiert, also einem auf der windabgewandten Seite der Gondel angeordneten Rotor. Eine Zweiblatt- oder Vierblattgeometrie sorgt dafür, dass der Aufbau gegenüber den typischen Dreiblattanlagen deutlich weniger komplex ist.

Leistungseinbußen durch nicht optimale Betriebszustände sollen möglichst vermieden werden. Beispielsweise erfolgt üblicherweise eine motorische Nachführung des Rotors bei Winkelabweichungen zwischen Rotorachse und Windrichtung, also Änderungen der Windrichtung oder einem Herausdrehen der Gondel, da sonst die Leistung der Anlage signifikant absinkt. Im Stand der Technik wird hierzu in der Regel ein sogenannter Nachführmotor an der Gondel angebracht, der die gesamte Gondel um eine vertikale Achse zur Nachführung in Windrichtung drehen kann.

Aus der WO 2005/090781 A1 geht eine Windenergieanlage hervor, bei der einer Belastungsreduzierung durch zyklische Variation der Blattanstellwinkel erfolgt. Aus der EP 2 154 363 A1 ist ein System zur Unterstützung von Gondeldrehungen mittels Windkräften bekannt. Die DE 196 45 581 A1 offenbart mittenfreie Drehverbindungen für Gondeln von Windenergieanlagen. Aus der EP 0 110 807 A1 ist ein System zur Dämpfung periodischer Schwingungen der Gondel einer Windenergieanlage bekannt.

Nachteilig ist dabei, dass für diese Nachregelung Energie notwendig ist. Außerdem sind die auftretenden Kräfte so groß, dass sich in der Regel eine hohe Nachführgeschwindigkeit und ein geringer Energieaufwand ausschließen. Allgemein soll ein kontinuierlicher Betrieb einer Windenergieanlage im optimalen Betriebszustand mit möglichst wenigen Stellgrößen ermöglicht werden.

Die der Erfindung zugrundeliegende Aufgabe besteht darin, eine Windenergieanlage und ein entsprechendes Verfahren zum Betrieb derselben anzugeben, um die beschriebenen Nachteile des Standes der Technik zu überwinden.

Ein Verfahren mit den Merkmalen des Anspruchs 1 löst die zugrundeliegende Aufgabe. Zunächst wird eine Winkelabweichung der Gondelstellung von einer Sollstellung ermittelt. Das Verfahren zeichnet sich dadurch aus, dass der Blattanstellwinkel jedes der Rotorblätter individuell und/oder kontinuierlich verstellt wird. Diese Verstellung geschieht derart, dass eine Drehung der Gondel zur Nachführung der Rotorachse in die Sollposition bewirkt wird. Dabei wird ausgenutzt, dass durch Änderung des Blattanstellwinkels unterschiedlich große Kräfte auf verschiedene Blätter einwirken können. Dazu wird der Blattanstellwinkel zweier Rotorblätter auf gegenüberliegenden Seiten von der senkrechten unterschiedlich eingestellt, so dass so ein resultierender Giermoment durch die unterschiedlichen Kräfte resultiert. Insgesamt führt dies dazu, dass ein Drehmoment auf die Gondel einwirkt, so dass diese sich bei richtiger Einstellung der Blätter um die vertikale Achse dreht. Vorzugsweise wird damit also eine Nachführung der Gondel in Windrichtung erreicht. Außerdem wird eine zur Anpassung an unterschiedliche Windgeschwindigkeiten vorhandene Steuerung der Blattanstellwinkel hierzu verwendet. Demnach wird der Blattanstellwinkel, also der Drehwinkel des Rotorblattes relativ zur Rotationsebene des Rotors, dynamisch während der Rotorumdrehung angepasst. Aufgrund der großen Rotordurchmesser und entsprechend geringer Umdrehungsgeschwindigkeiten mit Periodendauern von wenigstens einer Sekunde, typischerweise mehreren Sekunden je Umdrehung ist eine dynamische und individuelle, also separate Verstellung des Rotorblattanstellwinkels je Rotorblatt möglich.

Bevorzugt wird die Drehung der Gondel durch Windkräfte und/oder motorische Kräfte vorgenommen. Besonders bevorzugt erfolgt bei Überschreiten einer vorherbestimmten Winkelabweichung der Gondelstellung von der Sollstellung, einem Grenzwert, zunächst eine motorische Drehung der Gondel zur Nachführung. Die Winkelabweichung betrifft beide Drehrichtungen der Gondel. Der Grenzwert kann vorab festgelegt sein, wobei er sich insbesondere aus technischen Gründen ergeben kann. Eine Winkel der Gondel um 90° zur Windrichtung führt beispielsweise dazu, dass die Drehebene des Rotors parallel zur Windrichtung liegt und so der Rotor praktisch nicht mehr angetrieben werden kann. Eine motorische Drehung erfolgt vorzugsweise zumindest bis zum Unterschreiten der vorherbestimmten Winkelabweichung. Insbesondere kann die motorische Nachführung zumindest so weit erfolgen, bis eine weitere Nachführung durch Windkraft greifen kann. Weiter bevorzugt erfolgt die motorische Drehung zumindest im Wesentlichen bis zum Erreichen der Sollposition. Auf diese Weise wird sichergestellt, dass eine Nachführung bei zu großen Abweichungen, die durch eine Drehung nur durch Windkraft nicht oder nur schwer kompensiert werden können, durch motorische Kräfte sichergestellt wird. Unterhalb der vorherbestimmten Winkelabweichung können dann sowohl motorische Kräfte als auch Windkräfte zur Nachführung verwendet werden.

Besonders bevorzugt wird die Drehung der Gondel zumindest zeitweise gedämpft. Die Dämpfung, insbesondere die Stärke der Dämpfung ist insbesondere einstellbar. Vorzugweise erfolgt die Dämpfung mittels wenigstens eines Dämpfungselements. Das Dämpfungselement weist insbesondere eine einstellbare und/oder regelbare Dämpfungswirkung auf, wobei vorzugsweise die Dämpfungsstärke. Eine Dämpfung dient dazu, eine freidrehende Gondel gleichzeitig stabil ausgerichtet zu lassen und gegenüber durch Änderung des Blattanstellwinkels verursachten Windkräften zur Drilling der Gondel nachgeben zu können. Eine Dämpfung ist erforderlich, um eine ungewollte freie Rotation der Gondel zu vermeiden. Besonders bevorzugt erfolgt die Dämpfung durch einen Motor, insbesondere einen Elektromotor, ein hydrodynamisches System, insbesondere eine hydrodynamische Kupplung und/oder eine Bremse.

Weiter bevorzugt werden jeweils zwei gegenüberliegend an der Rotornabe angeordnete Rotorblätter bei einer Änderung des jeweiligen Anstellwinkels, zumindest im Wesentlichen relativ zueinander in entgegengesetzter und/oder gegensinniger Weise, verstellt, vorzugsweise gleichzeitig. Dadurch werden vorzugsweise durch die Änderung des Blattanstellwinkels hervorgerufene Momente zumindest teilweise kompensiert. Außerdem ist beispielsweise bei einem Übergang der gegenüberliegender Rotorblätter von einem vertikalen Halbraum zum anderen, also bei einem oberen oder unteren Nulldurchgang der Rotorblätter bei Rotordrehung, eine entsprechende Anpassung der Blattstellung auf den jeweiligen anderen Halbraum für jedes der Rotorblätter erforderlich.

Bevorzugt wird als Sollposition der Gondel eine Ausrichtung relativ zur und/oder in Windrichtung und/oder ein Winkel oder Winkelbereich zwischen der Rotorachse und der Windrichtung zugrundegelegt. Besonders bevorzugt erfolgt die Ausrichtung der Rotorachse zumindest im Wesentlichen in beziehungsweise parallel zur Windrichtung. In diesem Fall erreicht der Rotor seine optimale Leistung. Insbesondere erfolgt eine Nachführung zur Minimierung der Winkelabweichung zwischen Windrichtung und aktueller Gondelstellung. Besonders bevorzugt erfolgt eine Messung der aktuellen Windrichtung und/oder des aktuellen Drehwinkels der Gondel, insbesondere der Ausrichtung, relativ zum Turm und/oder zur Windrichtung. Diese Messung erfolgt insbesondere zur Ermittlung einer Winkelabweichung, bevorzugt mittels einer Steuerungseinrichtung. Auf Basis der Messung wird dann die entsprechende Winkelabweichung berechnet, um davon ausgehend entsprechende Parameter für eine Steuerung der Betriebsparameter der Windenergieanlage zu ermitteln. Zur Messung der Windrichtung werden insbesondere mechanische, elektrische und/oder strahlungsgestützte Messgeräte eingesetzt. Vorzugsweise kommen insbesondere Windanzeiger, vorzugsweise mit Anemometer, Radar, LIDAR oder ähnliches in Betracht. Alternativ oder ergänzend kann auch eine Ermittlung der Relativstellung der Gondel zur Windrichtung, also der Winkelabweichung, durch eine Lastermittlung der Rotorblätter erfolgen. Dazu wird die unterschiedliche Belastung der Rotorblätter insbesondere in unterschiedlichen Drehstellungen des Rotors zugrundegelegt, um Rückschlüsse auf die Relativstellung der Gondel zum Wind zu erhalten.

Weiter bevorzugt wird eine aktuelle Stellung beziehungsweise Istposition der Gondel und/oder eine Winkelabweichung der Gondel relativ zu einer, beziehungsweise der Sollposition ermittelt. Besonders bevorzugt erfolgt diese Ermittlung beziehungsweise die Ermittlung der Winkelabweichung im Wesentlichen kontinuierlich. Weiter bevorzugt erfolgt dies zur insbesondere individuellen Regelung der Einstellung der Blattanstellwinkel. Der beziehungsweise die Blattanstellwinkel werden basierend auf den Messergebnissen und/oder insbesondere der beschriebenen Rahmendaten ermittelt und entsprechend eingestellt. Damit wird vorzugsweise erreicht, dass eine optimale Steuerung der Betriebsparameter sichergestellt wird.

In einer bevorzugten Ausführung der Erfindung wird der Blattanstellwinkel jedes der Blätter insbesondere zur Reduzierung der Belastung der Windenergieanlage, insbesondere der Rotorblätter geändert. Vorzugsweise erfolgt hierzu eine Ermittlung der aktuellen Belastung wenigstens eines Bestandteils der Windenergieanlage, vorzugsweise wenigstens eines, insbesondere jedes der Rotorblätter. Vorzugsweise erfolgt eine Belastungsmessung des wenigstens einen Rotorblattes, insbesondere durch eine Messung der Blattbiegung, vorzugsweise mittels einer Dehnungsmessung. Hierzu wird insbesondere wenigstens ein Dehnungsmessstreifen verwendet. Dazu ist vorzugsweise jeweils wenigstens ein Dehnungsmessstreifen für jedes der Rotorblätter vorgesehen. Die insbesondere individuelle Regelung der Blattanstellwinkel kann somit für eine Reduzierung der Belastung der Komponenten der Windenergieanlage sorgen. Eine kontinuierliche und periodische, also zyklische Reaktion auf aktuelle Betriebsparameter, wie Blattverbiegungen, insbesondere durch regelmäßige und/oder unregelmäßige Belastungen beispielsweise durch Windströmungen, wird ermöglicht.

Die der Erfindung zugrundeliegende Aufgabe wird außerdem durch eine Windenergieanlage mit den Merkmalen des Anspruchs 9 gelöst. Diese Windenergieanlage ist insbesondere zur Ausführung des oben beschriebenen Verfahrens ausgebildet. Die Windenergieanlage weist einen Rotor mit wenigstens einem Rotorblatt und vorzugsweise zwei oder vier Rotorblättern auf. Das Rotorblatt ist an einer horizontal drehbar gelagerten Gondel drehbar gelagert. Jedes Rotorblatt ist unabhängig von den übrigen Rotorblättern um seine Längsachse drehbar an der Rotornabe gelagert. Dabei ist wenigstens eine Einrichtung zur individuellen Drehung jedes der Rotorblätter um seine Längsachse zur Veränderung des Blattanstellwinkels vorgesehen. Des Weiteren weist die Windenergieanlage eine Messeinrichtung zur Ermittlung der Istposition der Gondel und/oder der Abweichung der Stellung der Gondel relativ zu einer Sollposition auf. Die Windenergieanlage ist dadurch gekennzeichnet, dass die Gondel durch Einstellung und Änderung des Blattanstellwinkels, wenigstens eines Rotorblattes zur Minimierung der Abweichung der Sollposition und/oder zum Erreichen einer Sollposition, drehbar ist. Besonders bevorzugt sind die Rotorblätter derart um ihre Längsachse zur Veränderung des Blattanstellwinkels drehbar, dass damit ein Giermoment und eine Drehung der Gondel um ihre vertikale Achse erreicht wird. Damit soll eine Abweichung der Gondelstellung von einer Sollposition minimiert werden beziehungsweise die Belastung der Komponenten der Windenergieanlage minimiert werden.

Bevorzugt ist wenigstens ein Messgerät zur Ermittlung der aktuellen Windrichtung und/oder der Ermittlung der aktuellen Gondelposition beziehungsweise Drehung und/oder der Belastung wenigstens einer Komponenten der Windenergieanlage vorgesehen. Als Messgeräte kommen insbesondere die oben bereits erwähnten in Betracht. Besonders bevorzugt ist eine Steuerung vorgesehen zur Ermittlung der Abweichung und/oder der dynamischen Änderung der jeweiligen Blattanstellwinkel, vorzugsweise mittels wenigstens eines Steuerungsgerätes. Aufgrund der mit Hilfe der Messgeräte ermittelten Messwerte kann eine dynamische Steuerung der Betriebsparameter der Windenergieanlage erfolgen. Vorzugsweise wird eine Steuerung zu den oben bereits beschriebenen optimalen Betriebsparametern vorgenommen.

Weiter bevorzugt sind jeweils zwei gegenüberliegend an der Rotornabe angeordnete Rotorblätter, die zumindest im Wesentlichen genau gleichsinnig und/oder gegensinnig drehbar sind, vorzugsweise zumindest im Wesentlichen gleichzeitig, bevorzugt um vergleichbare Werte. Dies ermöglicht eine zumindest teilweise Kompensation der Momente der Rotorblätter bei einer entsprechenden Drehung.

Die der Erfindung zugrundeliegende Aufgabe wird außerdem durch eine Steuerungseinrichtung für eine Windenergieanlage nach einem der vorhergehenden Ansprüche gelöst. Die Steuerungseinrichtung ist dazu ausgebildet, die oben obligatorisch und/oder fakultativ beschriebenen Merkmale zur Steuerung der Windenergieanlage zu verkörpern. Vorwiegend dient sie zur Steuerung der Windenergieanlage im beziehungsweise in den optimalen Betriebsbereich und insbesondere zur Einhaltung desselben.

Ein bevorzugtes Ausführungsbeispiel der Erfindung wird im folgenden anhand der Figuren der Zeichnung näher beschrieben. In dieser zeigen:
Fig. 1 Eine Darstellung einer erfindungsgemäßen Windenergieanlage in einer perspektivischen Darstellung,

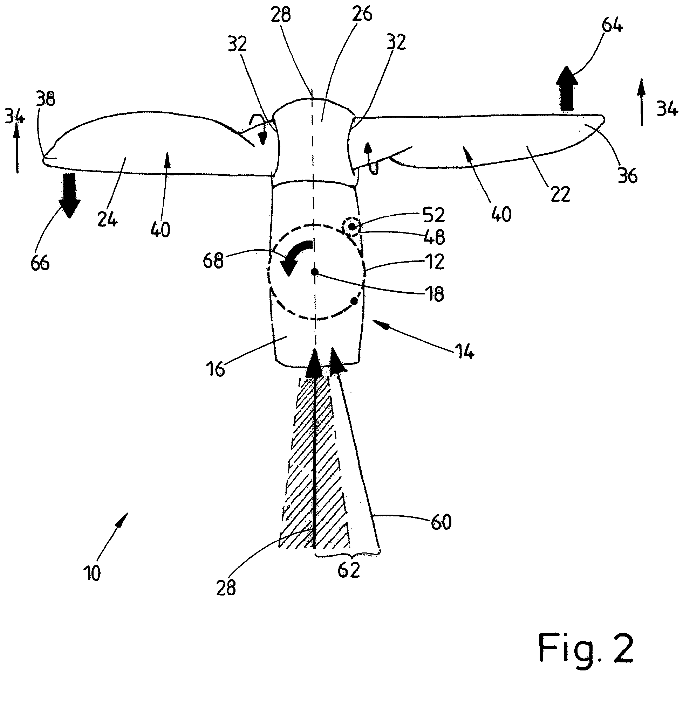

Fig. 2 eine Ansicht der Windenergieanlage der Fig. 1 in einer Draufsicht von oben,

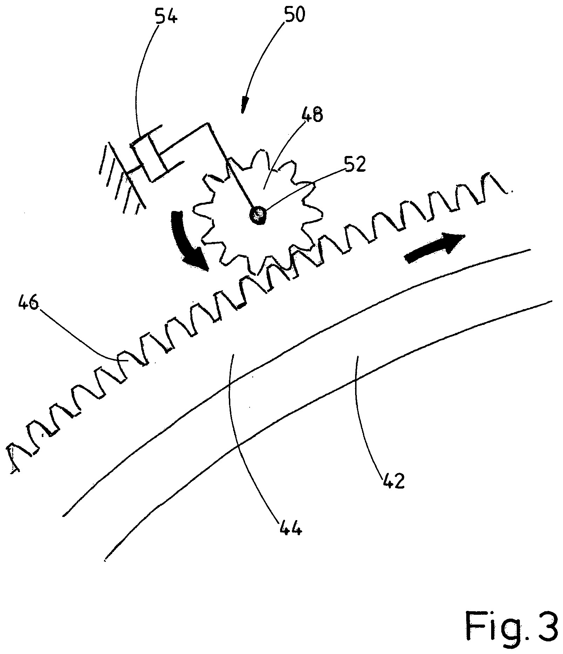

Fig. 3 einen Ausschnitt des Gondellagers mit zugehöriger Mechanik, und

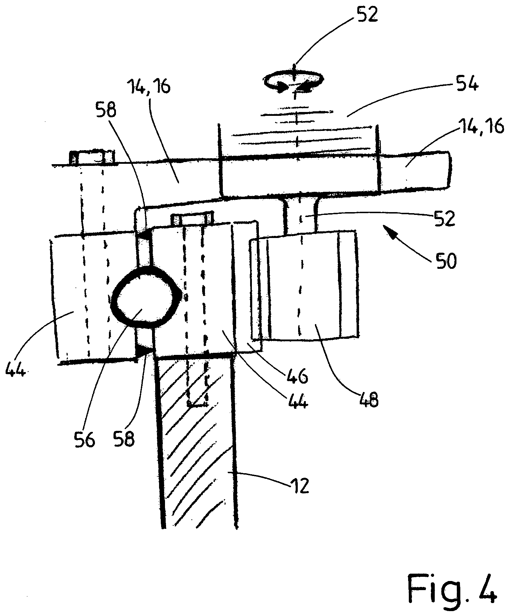

Fig. 4 eine seitliche Teildarstellung der die Gondelrotation betreffenden Mechanik.

Eine Windenergieanlage 10 umfasst eine Tragvorrichtung, wie insbesondere einen Turm 12, an dessen oberem Ende eine so genannte Gondel 14 angeordnet ist. Die Gondel 14 weist ein Gehäuse 16 auf, in dessen Inneren typischerweise unterschiedliche hier nicht gezeigte technische Einrichtungen angeordnet sind, wie insbesondere ein Getriebe, ein Generator, Steuerungseinrichtungen und Ähnliches.

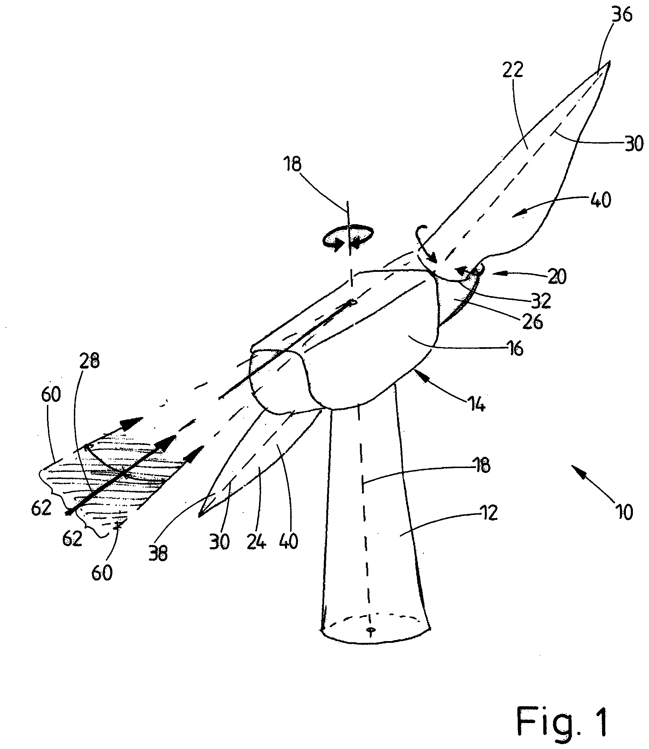

Als wesentliches Element trägt die Gondel 14 den Rotor 20 mit hier zwei Rotorblättern 22 und 24, die einseitig an einer zentralen Rotornabe 26 befestigt sind. Der Rotor 20 ist dazu ausgebildet, sich im Wind zu drehen und damit einen entsprechenden Generator zur Erzeugung elektrischer Energie anzutreiben. Dazu weisen die Rotorblätter 22 und 24 eine im Querschnitt tragflügelförmige Form auf. Der Drehsinn des Rotors 20 ist in Figur 1 durch entsprechende Pfeile angedeutet. Der Rotor 20 dreht sich dabei um die Rotorachse 28 in der Ebene, die von diesen Rotorblättern 22, 24 und einer Geraden aufgespannt wird, die gleichzeitig sowohl zu den Rotorblättern 22 und 24 bzw. der Blattachse 30 als auch zur Rotorachse 28 senkrecht verläuft.

Im vorliegenden Fall handelt es sich bei der Windenergieanlage 10 um eine so genannte Zwei-Blatt-Anlage. Dies bedeutet, dass der Rotor 20 gerade zwei Rotorblätter 22 und 24 aufweist. Die Rotorblätter 22 und 24 sind dabei aus Symmetriegründen jeweils im wesentlichen senkrecht zur Rotorachse 28 und auf einer Geraden, der sogenannten Blattachse 30, verlaufend angeordnet, die selber durch die Mitte der Rotornabe 26 verläuft. Die Rotorachse 28 verläuft dabei im wesentlichen in Längsrichtung durch das Gehäuse 16 der Gondel 14 und üblicherweise zumindest im Wesentlichen horizontal.

Die Rotorblätter 22 und 24 sind um die Blattachse 30 drehbar angeordnet. Dazu sind im Bereich der Rotornabe 26 entsprechende Blattlager 32 vorgesehen. Die Drehbarkeit ist in den Figuren durch entsprechende Ringpfeile angedeutet.

Es handelt es sich bei der hier beschriebenen Windenergieanlage 10 um einen so genannten Lee-Läufer. Dies bedeutet, dass der Rotor 20 auf der sind abgewandten Seite der Windenergieanlage 10 rotiert, also der Wind zunächst über die Gondel 14 streicht, um dann sozusagen rückseitig auf den Rotor 20 zu treffen. Dies ist mit dem Fall 34 angedeutet, der die Hauptwindrichtung angelegt. Grundsätzlich ist die beschriebene Erfindung aber auch bei sogenannten Luv-Läufern, also Windenergieanlagen mit windzugewandtem Rotor anwendbar.

Die Rotorblätter 22 und 24 biegen sich im Bereich ihrer Blattenden 36 und 38 entsprechend der jeweiligen Windlast in Richtung der Hauptwindrichtung, wie durch den Pfeil 34 angezeigt ist. In der Regel im Bereich der Oberfläche der Rotorblätter 22 und 24 sind daher zur Ermittlung der Durchbiegung derselben so genannte Dehnungsmessstreifen 40 angeordnet. Da die Dehnungsmessstreifen 40 zumindest im Bereich der stark belasteten Blattenden 36 und 38, in der Regel aber im wesentlichen entlang der gesamten Rotorblätter 22 und 24 erstreckt sind, wird damit eine Messung der Blattbiegung ermöglicht. Gegebenenfalls können Dehnungsmessstreifen 40 auch auf beiden Seiten der Rotorblätter 22, 24 angeordnet sein, um beispielsweise oszillierende Bewegungen der Blätter genauer aufnehmen zu können.

Zur Drehung der beiden Rotorblätter 22 und 24 sind im Bereich der Rotorblätter 22 bzw. 24, der Rotornabe 26 beziehungsweise der Gondel 14 Verstelleinrichtungen zur Drehung der Rotorblätter 22 und 24 um die Blattachse 30 angeordnet. Es handelt sich dabei in der Regel um eine motorische, insbesondere hydraulische und/oder elektromotorische Verstellung. Desweiteren sind die Rotorblätter 20 und 24 separat und unabhängig voneinander verstellbar. Hierzu können sowohl eine gemeinsame Verstelleinrichtung als auch separate Verstelleinrichtungen vorgesehen sein.

Die Gondel 14 ist um die Gondeldrehachse 18 gegenüber dem Turm 12 der Windenergieanlage 10 drehbar gelagert. Dazu dient zum einen ein innerer Lagerungsring 42, der von einem äußeren Lagerungsring 44 umgeben ist. Der äußeren Lagerungsring 44 ist mit dem oberen Endbereich des Turms 12 verbunden. Der innere Lagerungsring 42 ist an der Gondel 14 montiert. Der innere Lagerungsring 42 ist mit entsprechenden Lagerungsmitteln, insbesondere als Kugellager oder Wälzlager, am äußeren Lagerungsring 44 beweglich, also sind sie insbesondere gegeneinander drehbar gelagert. Der innere Lagerungsring 42 ist dabei in den Innenkreis des äußeren Lagerungsrings 44 eingepasst. Dazwischen sind Lagermittel 56, wie beispielsweise Kugeln oder Walzen, und gegebenenfalls Abstandshalter 58 eingesetzt. Dementsprechend ist die Gondel 14 zusammen mit den inneren Lagerungsring 42 dem äußeren Lagerungsring 44 am Turm 12 reibungsarm drehbar gelagert.

Ein Zahnrad 48 ist mittels einer Achse 52 mit einer Antriebseinheit 54 verbunden, die an der Gondel 14 drehbar gelagert ist. Die Antriebseinheit 54 beinhaltet mehrere hier nicht im Detail gezeigte Bestandteile. Zum einen ist die Achse 52 mit einem Getriebe verbunden. Dieses Getriebe ist über eine hydrodynamische Kupplung mit einem Elektromotor verbunden.

Im Betriebsmodus zum Antreiben der Gondel 14 wird der Elektromotor betrieben, während die hydrodynamische Kupplung eingerückt ist. Somit wird die Kraft des Elektromotors über das Getriebe und das Zahnrad 48 auf den Zahnkranz 46 übertragen. Dies führt zu einer Drehung der Gondel gegenüber dem Turm 12.

Im Betrieb als Dämpfungselement 50 wird der Elektromotor arretiert. Somit kann das Zahnrad 48 lediglich gegen den Widerstand der hydrodynamischen Kupplung gedreht werden. Dies führt zu einer Dämpfung der Drehung der Gondel 14 durch die Bremskraft der hydrodynamischen Kupplung. Das Zahnrad 48 und die Antriebseinheit 54 werden folglich gemeinsam auch als Dämpfungselement 50 bezeichnet.

Das erfindungsgemäße Verfahren läuft bevorzugt wie folgt:
Da eine Abweichung der Ausrichtung des Rotors 20 von der optimalen Stellung in Windrichtung für Leistungseinbußen sorgt, wird diese Relativstellung, also die sogenannte Winkelabweichung ermittelt. Als relevante Achse des Rotors 20 wird die mittig durch die Rotornabe 26 verlaufende Rotorachse 28 verwendet, die gleichzeitig die Drehachse des Rotors 20 ist.

Zur Ermittlung der aktuellen Relativstellung des Rotors 20 beziehungsweise der Gondel 14 zur Windrichtung kann beispielsweise ein Windrichtungsmessgerät dienen. Das Messgerät kann an der Gondel 14 oder an einem ortsfesten beziehungsweise nicht mitdrehenden Teil der Windenergieanlage 10, wie insbesondere am Turm 12, oder auch an einer externen Halterung befestigt sein. Bei dem Messgerät kann es sich beispielsweise um eine Windfahne, gegebenenfalls mit Anemometer, ein Radar, ein LIDAR (Light Detection And Ranging) oder ähnliches handeln. Außerdem können durch Messung der unterschiedlichen Windlast auf den Rotorblättern 22, 24 und die daraus resultierenden unterschiedlichen Blattbiegung Rückschlüsse auf die Windrichtung gezogen werden. Diese Messmethode kann separat oder in Kombination mit den bekannten Messverfahren der Windrichtung eingesetzt werden.

Eine Befestigung an der mitdrehenden Gondel 14 bietet den Vorteil, dass das Windrichtungsmessgerät ohne eine zusätzliche Messung der Gondelstellung bereits eine Abweichung anzeigt. Bei einer ortsfesten Windrichtungsmessung beispielsweise am Turm 12 muss zusätzlich noch die Stellung der Gondel 14 relativ zum Turm 12 bestimmt werden, um die Abweichung zwischen der Gondelstellung und der Windrichtung berechnen zu können. Der gemessene beziehungsweise berechnete Winkel zwischen der Rotorachse 26 und der Windrichtung wird dabei als Abweichung bezeichnet. Die Abweichung wird vorzugsweise in kurzer Abfolge periodisch ermittelt, um beispielsweise bei Änderungen der Stellung der Rotorachse 46 oder der Windrichtung jederzeit die aktuelle Abweichung vorliegen zu haben.

In einem weiteren Verfahrensschritt wird festgestellt, ob die Abweichung innerhalb vorgegebener Grenzen liegt. Aufgrund dessen kann dann über das zu verwendende Mittel zur Nachführung der Gondel 14 entschieden werden. Zum einen kann eine motorische Nachführung erfolgen, zum anderen aber auch eine Nachführung durch Windkraft. Liegt die Abweichung unterhalb vorgegebener Grenzwerte, wird üblicherweise eine Nachführung durch Windkraft eingeleitet, anderenfalls zumindest eine teilweise motorische Nachführung.

Außerdem erfolgt eine Nachführung auf motorischem Wege, wenn es zwischenzeitlich durch mehrfache vollständige Rotation der Gondel 14 um die Gondeldrehachse 18 in nur einer Drehrichtung zu einer Verdrillung der davon ausgehenden Kabel im Innern des Turm 12 gekommen ist. Um diese Verdrillung wieder zu lösen erfolgt dann gegebenenfalls eine motorische Rotation in die Gegenrichtung.

Als Grenzwerte für eine windbetriebene Nachführung werden typischerweise beidseitige Winkelabweichungen von zwischen 5° und 90°, typischerweise kleiner etwa 60° festgelegt. Unterhalb ist eine Nachführung allein durch Windkraft ohne Schwierigkeiten möglich. Oberhalb kann entweder eine vollständige Nachführung auf motorischem Wege erfolgen. Alternativ kann eine Rückführung bis in das festgelegte Intervall für die windbetriebene Nachführung hinein vorgenommen werden, also bis die Abweichung kleiner als die festgelegte maximale Winkelabweichung ist. Zumindest wird eine motorische Nachführung in der Regel aber oberhalb einer Winkelabweichung von etwa 90° vorgenommen, da dann der Rotor 20 senkrecht zur Windrichtung rotierend praktisch keinen Antrieb mehr erfährt. In dieser Stellung kann folglich eine windkraftbasierte Nachführung üblicherweise nicht mehr funktionieren.

Eine motorische Nachführung erfolgt hier mittels eines Elektromotors. Ein solcher Elektromotor kann dazu als Teil des Dämpfungselements 50 bereits verbaut sein. Als Antrieb wird der Motor derart betrieben, dass über das Zahnrad 48 die Gondel 14 relativ zum Zahnkranz 46 am äußeren Lagerungsring 44 und damit gegenüber dem Turm 12 gedreht wird. Diese Drehung wird entweder solange aufrecht erhalten, bis die Winkelabweichung der Gondel 14 gegenüber der Windrichtung kleiner als der festgelegte Grenzwert oder sogar praktisch auf Null reduziert ist.

Eine windbetriebene Nachführung wird durch eine individuelle Verstellung der Blattanstellwinkel der Rotorblätter 22 und 24 hervorgerufen, die sogenannte individuelle Blattwinkelverstellung ("individual pitch control" (IPC)). Dazu werden die Blattanstellwinkel der beiden Rotorblätter 22 und 24 unabhängig voneinander derart verändert, dass insgesamt ein resultierendes Giermoment, also ein Drehmoment auf die Gondel 14 wirkt. Dies erfolgt durch Drehung der Rotorblätter 22, 24 um deren Blattachse 30. Um entgegen gerichtete Kräfte auszuüben, ist eine gerade gegensinnige Drehung der Rotorblätter 22, 24 erforderlich, insbesondere um denselben, aber entgegengesetzten Drehwinkel. Das resultierende Giermoment aufgrund der Windkräfte sorgt dann für eine Drehung der Gondel 14 und damit für eine Nachführung zur Reduzierung der Winkelabweichung. Das Dämpfungselement 50 dient dabei ferner dazu, eine Drehung der frei gegenüber dem Turm 12 drehbaren Gondel 14 zu verzögern.

Im Einzelnen läuft die individuelle Blattwinkelverstellung (IPC) wie folgt ab:
Zunächst wird die aktuelle relative Stellung der Gondel 14 zur derzeitigen Windrichtung 60, also eine eventuelle Winkelabweichung 62 ermittelt. Dies kann auf die oben beschriebenen Weisen erfolgen, also beispielsweise durch Windrichtungsmessung oder über Blattbelastungen. Sofern demnach eine Winkelabweichung zwischen der aktuellen Windrichtung 60 und der Rotorachse 28 festgestellt wird, veranlasst die Steuerungseinrichtung eine Nachführung durch Blattwinkelverstellung. Die Rotorblätter 22 und 24 sind dazu, wie oben beschrieben ist, zur Verstellung des Blattanstellwinkels, des sogenannten "Pitch", um die eigene Längsachse, also die Blattachse 30, drehbar gelagert.

Das Verdrehen der Rotorblätter 22 und 24 erfolgt dabei derart in entgegengesetztem Drehsinn, dass die beiden Blätter 22 und 24 entgegengesetzte resultierende Windkräfte 64 beziehungsweise 66 über die Rotorachse 28 auf die Gondel 14 ausüben. Damit wird ein Drehmoment beziehungsweise ein sogenanntes Giermoment 68 auf die Gondel 14 ausgeübt. Die Gondel 14 dreht sich damit in Richtung des ausgeübten Giermoments 68, so dass sich die aktuelle Winkelabweichung 62 durch diese Nachführung verringert. Die Messung und Nachführung wird durch die Steuerung nahezu kontinuierlich beziehungsweise mit hoher Wiederholrate, also insbesondere mehrfach bis vielfach pro Sekunde, durchgeführt. Somit kann die Steuerung jederzeit auf geänderte Windverhältnisse reagieren.

**Bezugszeichenliste**

| | | | |
|---|---|---|---|
| 10 | Windenergieanlage | 68 | Giermoment |
| 12 | Turm | | |
| 14 | Gondel | | |
| 16 | Gehäuse | | |
| 18 | Gondeldrehachse | | |
| 20 | Rotor | | |
| 22 | Rotorblatt | | |
| 24 | Rotorblatt | | |
| 26 | Rotornabe | | |
| 28 | Rotorachse | | |
| 30 | Blattachse | | |
| 32 | Blattlager | | |
| 34 | Pfeil | | |
| 36 | Blattende | | |
| 38 | Blattende | | |
| 40 | Dehnungsmessstreifen | | |
| 42 | innerer Lagerungsring | | |
| 44 | äußerer Lagerungsring | | |
| 46 | Zahnkranz | | |
| 48 | Zahnrad | | |
| 50 | Dämpfungselement | | |
| 52 | Achse | | |
| 54 | Antriebseinheit | | |
| 56 | Lagermittel | | |
| 58 | Abstandshalter | | |
| 60 | Windrichtung | | |
| 62 | Winkelabweichung | | |
| 64 | Windkraft | | |
| 66 | Windkraft | | |

## Patentansprüche

1. Verfahren zum Betreiben einer Windenergieanlage (10) mit einem an einer drehbar gelagerten Gondel (14) gelagerten Rotor (20) mit wenigstens einem Rotorblatt, vorzugsweise zwei oder vier Rotorblättern (22, 24), wobei die Rotorblätter der als Lee-Läufer ausgebildeten Windenergieanlage (1) im Betrieb auf der windabgewandten Seite der Gondel vom Wind angeströmt werden, und wobei eine Winkelabweichung (62) der Gondelstellung von einer Sollstellung beziehungsweise einer Sollposition ermittelt wird, **dadurch gekennzeichnet, dass** der Blattanstellwinkel jedes der Rotorblätter (22, 24) individuell und/oder kontinuierlich derart verstellt wird, dass eine Drehung der Gondel (14) zur Nachführung der Rotorachse (28) mittels eines durch Windkräfte bewirkten Giermoments (68) in die Sollstellung bewirkt wird, wobei die Drehung der Gondel (14) mittels wenigstens eines Dämpfungselements (50) zumindest zeitweise gedämpft wird.

2. Verfahren nach Anspruch 1, **dadurch gekennzeichnet, dass** bei Überschreiten einer vorherbestimmten Winkelabweichung (62) der Gondelstellung (14) von der Sollstellung eine motorische Drehung der Gondel (14) erfolgt, bevorzugt zumindest bis zum Unterschreiten der vorherbestimmten Winkelabweichung, besonders bevorzugt zumindest im Wesentlichen bis zum Erreichen der Sollposition.

3. Verfahren nach Anspruch 1 oder 2, **dadurch gekennzeichnet, dass** das Dämpfungselement (50) eine einstellbare Dämpfungswirkung aufweist, wobei bevorzugt Dämpfungsstärke und/oder Richtung einstellbar ist, vorzugsweise stufenlos.

4. Verfahren nach einem der vorhergehenden Ansprüche, **dadurch gekennzeichnet, dass** jeweils zwei gegenüberliegend an der Rotornabe (26) angeordnete Rotorblätter (22, 24) bei einer Änderung des Blattanstellwinkels durch Drehung der Rotorblätter (22, 24) zumindest im Wesentlichen relativ in entgegengesetzter und/oder gegensinniger Weise verstellt werden, vorzugsweise zur Kompensation dadurch hervorgerufener Momente.

5. Verfahren nach einem der vorhergehenden Ansprüche, **dadurch gekennzeichnet, dass** als Sollstellung der Gondel (14) eine Ausrichtung relativ zur und/oder in Windrichtung (60) und/oder ein Winkel oder Winkelbereich zwischen der Rotorachse (28) und der Windrichtung (60) zugrundegelegt wird, vorzugsweise mit einer Ausrichtung der Rotorachse (28) zumindest im Wesentlichen in Windrichtung (60).

6. Verfahren nach einem der vorhergehenden Ansprüche, **dadurch gekennzeichnet, dass** eine Messung der aktuellen Windrichtung (60) und/oder des aktuellen Drehwinkels der Gondel (14), insbesondere der Ausrichtung relativ zum Turm (12) und/oder zur Windrichtung (60), erfolgt, insbesondere zur Ermittlung einer Winkelabweichung (62), bevorzugt mittels einer Steuerungseinrichtung, wobei vorzugsweise eine Messeinrichtung zur Messung der Windrichtung (60) verwendet wird.

7. Verfahren nach einem der vorhergehenden Ansprüche, **dadurch gekennzeichnet, dass** eine Istposition der Gondel und/oder eine Winkelabweichung der Gondel von einer beziehungsweise der Sollposition ermittelt wird, vorzugsweise zumindest im Wesentlichen kontinuierlich und/oder zur Regelung der Einstellung des beziehungsweise der Blattanstellwinkel.

8. Verfahren nach einem der vorhergehenden Ansprüche, **dadurch gekennzeichnet, dass** der oder die Blattanstellwinkel jedes der Rotorblätter (22, 24) zur Reduzierung der Belastung der Windenergieanlage (10) beziehungsweise deren Bestandteilen, insbesondere der Rotorblätter (22, 24), individuell geändert wird, wobei vorzugsweise eine Ermittlung der aktuellen Belastung wenigstens eines Bestandteils der Windenergieanlage (10), vorzugsweise wenigstens eines insbesondere jedes der Rotorblätter (22, 24) vorgenommen wird, insbesondere mittels einer Messung der Blattbiegung, vorzugsweise mittels einer Dehnungsmessung, insbesondere durch wenigstens einen Dehnungsmessstreifen (40).

9. Windenergieanlage, insbesondere zur Ausführung eines Verfahrens nach einem der vorhergehenden Ansprüche, mit einem an einer horizontal drehbar gelagerten Gondel (14) gelagerten Rotor (20) mit wenigstens einem Rotorblatt, vorzugsweise zwei oder vier Rotorblättern (22, 24), wobei jedes der Rotorblätter (22; 24) unabhängig von den übrigen Rotorblättern (22, 24) um seine Längsachse, die Blattachse (30), drehbar an der Rotornabe (26) gelagert ist, mit wenigstens einer Einrichtung zur individuellen Drehung jedes der Rotorblätter (22, 24) um seine Längsachse zur Veränderung des Blattanstellwinkels, wobei die Rotorblätter der als Lee-Läufer ausgebildeten Windenergieanlage (1) im Betrieb auf der windabgewandten Seite der Gondel vom Wind angeströmt werden, und mit einer Messeinrichtung zur Ermittlung der Istposition der Gondel (14) und/oder der Winkelabweichung (62) der Stellung der Gondel (14) relativ zu einer Sollposition, **dadurch gekennzeichnet, dass** die Gondel (14) durch Einstellung und/oder Änderung des Blattanstellwinkels wenigstens eines der Rotorblätter (22, 24) zur Minimierung der Winkelabweichung (62) von der Sollposition und/oder zum Erreichen einer Sollposition mittels eines durch Windkräfte bewirkten Giermoments (68) drehbar ist, wobei wenigstens ein Dämpfungselement (50) zur Dämpfung der Drehung der Gondel vorgesehen ist.

10. Windenergieanlage nach Anspruch 9, **dadurch gekennzeichnet, dass** wenigstens ein Messgerät zur Ermittlung der aktuellen Windrichtung (60) und/oder ein Messgerät zur Ermittlung der aktuellen Gondelstellung beziehungsweise -drehung und/oder der Belastung wenigstens einer Komponente beziehungsweise eines Bestandteils der Windenergieanlage (10) vorgesehen ist, wobei vorzugsweise eine Steuerungseinrichtung vorgesehen ist zur Ermittlung der Winkelabweichung (62) und/oder der dynamischen und/oder individuellen Änderung der jeweiligen Blattanstellwinkel.

11. Windenergieanlage nach Anspruch 9 oder 10, **dadurch gekennzeichnet, dass** jeweils zwei gegenüberliegend an der Rotornabe angeordnete Rotorblätter (22, 24) in zumindest im Wesentlichen gleichsinniger oder gegensinniger entgegengesetzter Weise drehbar sind.

12. Steuerungseinrichtung für eine Windenergieanlage (10) nach einem der vorhergehenden Ansprüche.

## Claims

1. A method for operating a wind turbine (10) having a rotor (20), which is mounted on a rotatably mounted nacelle (14) and which has a least one rotor blade, preferably two or four rotor blades (22, 24), wherein the rotor blades of the wind turbine (10) realized as a downwind-rotor turbine are exposed during operation to the wind on the side of the nacelle facing away from the wind, and wherein an angular deviation (62) of the nacelle position from a setpoint position is determined, **characterized in that** the angle of attack of each of the rotor blades (22, 24) is adjusted individually and/or continuously, in such a manner that the nacelle (14) is made to rotate for the purpose of correcting the rotor axis (28) into the setpoint position by means of a yaw moment (68) effected by wind forces, wherein the rotation of the nacelle (14) is damped, at least temporarily, by means of at least one damping element (50).

2. The method as claimed in claim 1, **characterized in that**, in the case of a predetermined angular deviation (62) of the position of the nacelle (14) from the setpoint position being exceeded, the nacelle (14) is rotated by motor, preferably at least until the angular deviation becomes less than the predetermined angular deviation, in particular preferably until the setpoint position has been attained, at least substantially.

3. The method as claimed in claim 1 or 2, **characterized in that** the damping element (50) has a settable damping effect, wherein preferably it is possible to set the damping strength and/or direction, preferably in a stepless manner.

4. The method as claimed in any one of the preceding claims, **characterized in that**, in the case of alteration of the angle of attack, respectively two rotor blades disposed (22, 24) oppositely on the rotor hub (26) are adjusted in an opposite manner and/or in opposite directions, at least substantially, relative to each other, by rotation of the rotor blades (22, 24), preferably for the purpose of compensating moments caused thereby.

5. The method as claimed in any one of the preceding claims, **characterized in that** an alignment relative to and/or in the wind direction (60), and/or an angle or angle range between the rotor axis (28) and the wind direction (60), is taken as a basis for a setpoint position of the nacelle (14), preferably with an alignment of the rotor axis (28) at least substantially in the wind direction (60).

6. The method as claimed in any one of the preceding claims, **characterized in that** a measurement of the current wind direction (60) and/or the current rotation angle of the nacelle (14), in particular the alignment, relative to the tower (12) and/or to the wind direction (60), is effected, in particular for the purpose of determining an angular deviation (62), preferably by means of a control means, wherein a measuring means is preferably used to measure the wind direction (60).

7. The method as claimed in any one of the preceding claims, **characterized in that** an actual position of the nacelle, and/or an angular deviation of the nacelle from a, or the, setpoint position is determined, preferably at least substantially continuously, and/or for the purpose of controlling the setting of the angle, or angles, of attack by closed-loop control.

8. The method as claimed in any one of the preceding claims, **characterized in that** the angle, or angles of attack of each of the blades (22, 24) is/are altered individually, for the purpose of reducing the load on the wind turbine (10), or on its constituent parts, in particular on the rotor blades (22, 24), wherein preferably the current load on at least one constituent part of the wind turbine (10), preferably on at least one, in particular each of the rotor blades (22, 24), is determined, in particular by means of a measurement of the blade deflection, preferably by means of a strain measurement, in particular by at least one strain gauge (40).

9. A wind turbine, in particular for executing a method as claimed in any one of the preceding claims, having a rotor (20) that is mounted on a horizontally rotatably mounted nacelle (14) and that has at least one rotor blade, preferably two or four rotor blades (22, 24), wherein each of the rotor blades (22; 24) is mounted on the rotor hub (26) so as to be rotatable about its longitudinal axis, the blade axis (30), independently of the other rotor blades (22, 24), having at least one means for individually rotating each of the rotor blades (22, 24) about its longitudinal axis, for the purpose of altering the angle of attack, wherein the rotor blades of the wind turbine (1) realized as a downwind-rotor turbine are exposed during operation to the wind on the side of the nacelle facing away from the wind, having a measuring means for determining the actual position of the nacelle (14) and/or the angular deviation (62) of the position of the nacelle (14) relative to a setpoint position, **characterized in that** the nacelle (14) can be rotated, as the result of setting and/or alteration of the angle of attack of at least one of the rotor blades (22, 24), for the purpose of minimizing the angular deviation (62) from the setpoint position and/or achieving a setpoint position by means of a yaw moment (68) effected by wind forces, wherein at least one damping element (50) is provided for damping the rotation of the nacelle.

10. The wind turbine as claimed in claim 9, **characterized in that** at least one measuring device is provided for determining the current wind direction (60) and/or a measuring device is provided for determining the current position or rotation of the nacelle, and/or the load on at least one component, or constituent part, of the wind turbine (10), wherein, preferably, a control means is provided for determining the angular deviation (62) and/or the dynamic and/or individual change in the respective angle of attack.

11. The wind turbine as claimed in claim 9 or 10, **characterized in that** respectively two rotor blades (22, 24) disposed oppositely on the rotor hub can be rotated in at least substantially the same direction and/or in opposite directions.

12. A control means for a wind turbine (10) as claimed in any one of the preceding claims.

## Revendications

1. Procédé pour faire fonctionner une éolienne (10) avec un rotor (20) monté sur une nacelle (14) montée rotative et présentant au moins une pale de rotor, de préférence deux ou quatre pales de rotor (22, 24), les pales de rotor de l'éolienne (1), conçue comme éolienne sous le vent, étant exposées au vent sur le côté de la nacelle opposé au vent pendant le fonctionnement, et un écart angulaire (62) de la position de la nacelle par rapport à une position de consigne étant déterminé, **caractérisé par le fait que** l'angle de calage de chacune des pales de rotor (22, 24) est réglé individuellement et/ou en continu de telle manière qu'une rotation de la nacelle (14) pour suivre l'axe du rotor (28) est provoquée au moyen d'un moment de lacet (68) entraîné par les forces du vent dans la position de consigne, la rotation de la nacelle (14) étant amortie au moins temporairement au moyen d'au moins un élément d'amortissement (50).

2. Procédé selon la revendication 1, **caractérisé par le fait qu'**en cas de dépassement d'un écart angulaire prédéterminé (62) de la position de la nacelle (14) par rapport à la position de consigne, une rotation motorisée de la nacelle (14) intervient, de préférence au moins jusqu'à ce que l'écart angulaire tombe en dessous de l'écart angulaire prédéterminé, et encore plus préférablement, au moins en substance, jusqu'à ce que la position de consigne soit atteinte.

3. Procédé selon la revendication 1 ou 2, **caractérisé par le fait que** l'élément d'amortissement (50) présente un effet d'amortissement réglable, la force d'amortissement et/ou la direction étant de préférence réglable, de préférence en continu.

4. Procédé selon l'une des revendications précédentes, **caractérisé par le fait que** respectivement deux pales de rotor (22, 24) disposées l'une en face de l'autre sur le moyeu de rotor (26) sont réglées au moins en substance l'une par rapport à l'autre dans des directions opposées et/ou contraires par rotation des pales de rotor (22, 24) lorsque l'angle de calage des pales est modifié, de préférence pour compenser les moments ainsi engendrés.

5. Procédé selon l'une des revendications précédentes, **caractérisé par le fait que**, comme position de consigne de la nacelle (14), une orientation par rapport au et/ou dans la direction du vent (60) et/ou un angle ou une plage angulaire entre l'axe du rotor (28) et la direction du vent (60) est prise pour base, de préférence avec une orientation de l'axe du rotor (28) au moins en substance dans la direction du vent (60).

6. Procédé selon l'une des revendications précédentes, **caractérisé par le fait qu'**une mesure de la direction actuelle du vent (60) et/ou de l'angle de rotation actuel de la nacelle (14), en particulier l'orientation par rapport à la tour (12) et/ou à la direction du vent (60), est effectuée, en particulier pour déterminer un écart angulaire (62), de préférence au moyen d'un dispositif de commande, en utilisant de préférence un dispositif de mesure permettant de mesurer la direction du vent (60).

7. Procédé selon l'une des revendications précédentes, **caractérisé par le fait qu'**une position réelle de la nacelle et/ou un écart angulaire de la nacelle par rapport à une ou à la position de consigne est déterminée, de préférence du moins en substance en continu et/ou pour commander le réglage de l'angle ou des angles de calage des pales.

8. Procédé selon l'une des revendications précédentes, **caractérisé par le fait que** le ou les angles de calage de chacune des pales de rotor (22, 24) sont modifiés individuellement pour réduire la charge sur l'éolienne (10) ou sur ses composants, en particulier sur les pales de rotor (22, 24), la charge actuelle sur au moins un composant de l'éolienne (10), de préférence sur au moins l'une, et en particulier sur chacune des pales de rotor (22, 24), étant de préférence déterminée, en particulier au moyen d'une mesure de la flexion de la pale, de préférence au moyen d'une mesure de l'allongement, en particulier au moyen d'au moins une jauge de contrainte (40).

9. Éolienne, en particulier pour la mise en œuvre d'un procédé selon l'une des revendications précédentes, avec un rotor (20) monté sur une nacelle montée rotative à l'horizontale (14), avec au moins une pale de rotor, de préférence deux ou quatre pales de rotor (22, 24), chacune des pales de rotor (22; 24) étant montée indépendamment des autres pales de rotor (22, 24) de manière rotative sur le moyeu de rotor (26) autour de son axe longitudinal, l'axe de pale (30), avec au moins un dispositif permettant de faire tourner individuellement chacune des pales de rotor (22, 24) autour de son axe longitudinal afin de modifier l'angle de calage des pales, les pales de rotor de l'éolienne (1), conçue comme une éolienne sous le vent, étant exposées au vent sur le côté de la nacelle opposé au vent pendant le fonctionnement, et avec un dispositif de mesure pour déterminer la position réelle de la nacelle (14) et/ou l'écart angulaire (62) de la position de la nacelle (14) par rapport à une position de consigne, **caractérisée par le fait que** la nacelle (14) peut tourner en calant et/ou en modifiant l'angle de calage d'au moins une des pales de rotor (22, 24) pour minimiser l'écart angulaire (62) par rapport à la position de consigne et/ou pour atteindre une position de consigne au moyen d'un moment de lacet (68) entraîné par les forces du vent, un élément d'amortissement (50) au moins étant prévu pour amortir la rotation de la nacelle.

10. Éolienne selon la revendication 9, **caractérisée par le fait qu'**au moins un dispositif de mesure est prévu pour déterminer la direction actuelle du vent (60) et/ou un dispositif de mesure pour déterminer la position ou la rotation actuelle de la nacelle et/ou la charge d'au moins un composant ou une partie de l'éolienne (10), un dispositif de commande étant de préférence prévu pour déterminer l'écart angulaire (62) et/ou la modification dynamique et/ou individuelle de l'angle de calage respectif des pales.

11. Éolienne selon la revendication 9 ou 10, **caractérisée par le fait que** respectivement deux pales de rotor (22, 24) disposées l'une en face de l'autre sur le moyeu de rotor sont rotatives au moins en substance dans le même sens ou dans des sens opposés.

12. Dispositif de commande pour une éolienne (10) selon l'une des revendications précédentes.
